# EUROPÄISCHE PATENTSCHRIFT

(11) **EP 0 439 762 B1**
(45) Veröffentlichungstag und Bekanntmachung des Hinweises auf die Patenterteilung: **03.05.1995**
(21) Anmeldenummer: 90124221.4
(22) Anmeldetag: 14.12.1990
(51) Int. Cl.: C01G 49/14

(54) **Verfahren zur Herstellung von lagerstabilem und fliessfähigem Grünsalz**
Process for the preparation of storage stable and free flowing ferrous sulphate
Procédé de préparation de sulfate ferreux stable au stockage et apte à s'écouler librement

(30) Priorität: 30.01.1990 DE 4002608
(43) Veröffentlichungstag der Anmeldung: 07.08.1991
(73) Patentinhaber: BAYER AG, 51368 Leverkusen (DE)
(72) Erfinder: Holtmann, Udo, Dr., W-4150 Krefeld 12 (DE)

(56) Entgegenhaltungen:
- EP-A- 0 168 308
- DE-A- 1 946 799
- FR-A- 2 261 229
- CHEMICAL ABSTRACTS, Band 83, Nr. 6, 11. August 1975, Seite 116, Zusammenfassung Nr. 45382f, Columbus, Ohio, US; & JP-A-75 03 998

## Beschreibung

Die Erfindung betrifft ein Verfahren zur Herstellung von lagerstabilem, fließfähigem Grünsalz durch Abmischung von feuchtem und getrocknetem Grünsalz ohne weitere Zusätze.

Das aus der Titandioxidproduktion nach dem Sulfatverfahren anfallende schleudertrockene Eisensulfatheptahydrat (Eisensulfat/Wasser-Gewichtsverhältnis etwa 1,0) wird als sogenanntes Grünsalz als Fällungs- und Flockungsmittel in Kläranlagen oder als Rohstoff für die Produktion von Eisenoxidpigmenten eingesetzt.

Durch die hygroskopischen Eigenschaften sind die Lagerung, der Transport und die Handhabung jedoch erschwert, da das Grünsalz zum Teil oxidiert und zu einer zähen, braunen Masse verklebt. Wird das Grünsalz dagegen auf ein Eisensulfat/Wasser-Gewichtsverhältnis von etwa 1,5, wie es üblicherweise bei bekannten Trocknungsverfahren anfällt, getrocknet, beeinträchtigt das starke Stauben die Handhabung.

Es ist bekannt, daß die Verwendung von Neutralisationsmitteln oder Wasserbindemitteln zu einer Erhöhung der Lagerbeständigkeit und Verbesserung des Fließverhaltens führt. So wird in US-PS 2 771 342 die Trocknung von Grünsalz auf ein Eisensulfat/Wasser-Gewichtsverhältnis von 1,27 bis 1,50 beschrieben. Nach Zusatz von feingemahlenem Calciumcarbonat und intensivem Mischen wird ein nicht zu Verklumpung neigendes, frei fließendes Produkt erhalten, das seine Eigenschaften auch nach 4 Wochen Lagerung bei 24°C (75°F) nicht verliert.

Nachteilig hierbei ist der Zusatz von Calciumcarbonat als Fremdkomponente. Ebenso nachteilig ist die Notwendigkeit, die gesamte Grünsalzmenge mit dem Zusatz zu vermischen und zu trocknen. Hiermit ist ein hoher Energieverbrauch verbunden.

Weiterhin bekannt ist, daß feuchtes Grünsalz durch Abmischung mit bei 250°C vorgetrocknetem und anschließend gemahlenem Grünsalz und pulverförmigen Neutralisierungsmitteln behandelt werden kann (EP-A 168 308). Durch den Zusatz von Neutralisationsmitteln werden Fremdkomponenten in das Grünsalz eingeschleust, wodurch dieses nicht mehr überall eingesetzt werden kann. Außerdem ist die Trocknung eines Teiles des feuchten Grünsalzes bei 250°C und die Zerkleinerung des gebildeten Kuchen durch Mahlung sehr aufwendig.

In der EP-A 321 747 wird die Herstellung und Verwendung von granuliertem Grünsalz unter Abmischung mit Koks beschrieben. Bei Mischung von feuchtem Grünsalz mit Braunkohlenstaub im Verhältnis 3:1 wird ein riesel- und lagerfähiges Gemenge der beiden Stoffe erhalten.

Als nachteilig ist hier der Zusatz an Koks zu bewerten. Hierdurch wird die Verwendung dieses Gemenges ausschließlich für die Abwasserreinigung eingeschränkt, wobei der anfallende Klärschlamm in einer Verbrennungsanlage entsorgt werden muß.

Aufgabe war es daher, ein Verfahren zur Verfügung zu stellen, welches die oben genannten Nachteile nicht aufweist.

Diese Aufgabe konnte durch das erfindungsgemäße Verfahren gelöst werden.

Gegenstand der Erfindung ist ein Verfahren zur Herstellung von lagerstabilem, fließfähigem Grünsalz, welches dadurch gekennzeichnet ist, daß feuchtes Grünsalz mit einem Eisensulfat/Wasser-Gewichtsverhältnis von 0,92 bis 1,09 und getrocknetes Grünsalz mit einem Eisensulfat/Wasser-Gewichtsverhältnis von 1,38 bis 1,71, welches durch Trocknung von feuchtem Grünsalz bei 40-60°C erhalten wird, in einem solchen Mengenverhältnis vermischt werden, so daß ein riesel- und lagerfähiges Produkt erhalten wird und ohne daß Neutralisationsmittel der Mischung zugesetzt werden.

Als feuchtes Grünsalz wird bevorzugt das bei der Titandioxidherstellung als Nebenprodukt anfallende Grünsalz eingesetzt.

Das vermischen des feuchten Grünsalzes mit dem getrockneten Grünsalz erfolgt unter intensivem Rühren.

In einer bevorzugten Verfahrensvariante wird feuchtes Grünsalz mit einem Eisensulfat/Wasser-Gewichtsverhältnis von 1,09 bis 0,92 mit getrocknetem Grünsalz mit einem Eisensulfat/Wasser-Gewichtsverhältnis von 1,38 bis 1,71 im Verhältnis 3:1 bis 1:2 vermischt.

Bevorzugt weist das riesel- und lagerfähige Grünsalz ein Eisensulfat/Wasser-Gewichtsverhältnis von 1,17 bis 1,50 auf.

Das nach dem erfindungsgemäßen Verfahren hergestellte fließ- und lagerfähige Grünsalz wird als Fällungs- und Flockungsmittel in Kläranlagen oder als Rohstoff für die Produktion von Eisenoxidpigmenten verwendet.

Vorteile des erfindungsgemäßen Verfahrens sind folgende:
- Im Vergleich zu getrocknetem Grünsalz zeigen die erfindungsgemäßen Mischungen ein deutlich geringeres Stauben. Die Handhabung ist erheblich erleichtert.
- Im Vergleich zu feuchtem Grünsalz wird das Fließverhalten günstig beeinflußt, wobei selbst nach mehrwöchiger Lagerung kein Abfall zu beobachten ist.
- Die partielle Oxidation zu Eisen(III)verbindungen ist nicht von einem Verkleben der Substanz begleitet. Bei Lagerung in Fässern ist die Oxidation praktisch zu vernachlässigen.
- Das Verfahren ist im Vergleich zur Trocknung der gesamten Grünsalzmenge energiesparend.
- Es werden dem Grünsalz keine eventuell störenden Neutralisations- oder Trocknungsmittel zugegeben; hierdurch sind die Verwendungsmöglichkeiten des nach dem erfindungsgemäßen Verfahren hergestellten Grünsalzes nicht unnötig eingeschränkt.

Die Erfindung soll anhand eines Beispiels näher erläutert werden.

### Ausführungsbeispiel

2 Gewichtsteile feuchtes Grünsalz (Eisensulfat/Wasser-Gewichtsverhältnis 1,04) werden mit 1 Gewichtsteil getrocknetem Grünsalz (Eisensulfat/Wasser-Gewichtsverhaltnis 1,44) intensiv vermischt. Das so erhaltene Produkt zeigt ein erheblich besseres Fließverhalten als die ungetrocknete Probe. Das Stauben der getrockneten Probe kann um rund 50 % vermindert werden. Sowohl das Fließverhalten wie das Stauben haben sich auch nach zweiwöchiger Lagerung bei hoher Luftfeuchtigkeit nicht signifikant zum negativen geändert.

Feuchtes Grünsalz liegt zum Vergleich als nicht fließfähige, feuchte Kristallmasse vor. Nach zweiwöchiger Lagerung unter den gleichen Bedingungen wie oben ist die Kristallmasse außerdem zu einem braunen, klebrigen Kristallbrei verklebt.

## Patentansprüche

1. Verfahren zur Herstellung von fließ- und lagerfähigem Grünsalz, dadurch gekennzeichnet, daß feuchtes Grünsalz mit einem Eisensulfat/Wasser-Gewichtsverhältnis von 0,92 bis 1,09 und getrocknetes Grünsalz mit einem Eisensulfat/Wasser-Gewichtsverhältnis von 1,38 bis 1,71, welches durch Trocknung von feuchtem Grünsalz bei 40-60°C erhalten wird, in einem solchen Mengenverhältnis vermischt werden, so daß ein riesel- und lagerfähiges Produkt erhalten wird und ohne daß Neutralisationsmittel der Mischung zugesetzt werden.

2. Verfahren nach Anspruch 1, dadurch gekennzeichnet, daß als feuchtes Grünsalz das bei der Titandioxidproduktion als Nebenprodukt anfallende Grünsalz eingesetzt wird.

3. Verfahren nach Anspruch 1, dadurch gekennzeichnet, daß das Vermischen des feuchten Grünsalzes mit dem getrockneten Grünsalz unter intensivem Rühren erfolgt.

4. Verfahren nach Anspruch 1, dadurch gekennzeichnet, daß feuchtes Grünsalz mit einem Eisensulfat/Wasser-Gewichtsverhältnis von 1,09 bis 0,92 mit getrocknetem Grünsalz mit einem Eisensulfat/Wasser-Gewichtsverhältnis von 1,38 bis 1,71 im Verhältnis 3:1 bis 1:2 vermischt wird.

5. Verfahren nach Anspruch 1, dadurch gekennzeichnet, daß das riesel- und lagerfähige Grünsalz ein Eisensulfat/Wasser-Gewichtsverhältnis von 1,17 bis 1,50 aufweist.

## Claims

1. A process for the production of storable, free-flowing green salt, characterized in that moist green salt having a ratio by weight of iron sulfate to water of 0.92 to 1.09 and dried green salt having a ratio by weight of iron sulfate to water of 1.38 to 1.71, which is obtained by drying moist green salt at 40 to 60°C, are mixed in such a quantity ratio that a free-flowing and storable product is obtained without any neutralizing agent being added to the mixture.

2. A process as claimed in claim 1, characterized in that the green salt obtained as a by-product in the production of titanium dioxide is used as the moist green salt.

3. A process as claimed in claim 1, characterized in that the moist green salt is mixed with the dried green salt by intensive stirring.

4. A process as claimed in claim 1, characterized in that moist green salt having a ratio by weight of iron sulfate to water of 1.09 to 0.92 is mixed with dried green salt having a ratio by weight of iron sulfate to water of 1.38 to 1.71 in a ratio of 3:1 to 1:2.

5. A process as claimed in claim 1, characterized in that the free-flowing and storable green salt has a ratio by weight of iron sulfate to water of 1.17 to 1.50.

## Revendications

1. Procédé pour la préparation d'un sulfate ferreux hydraté stable à la conservation et qui s'écoule bien, caractérisé en ce que l'on mélange du sulfate ferreux hydraté humide, à un rapport en poids sulfate de fer/eau de 0,92 à 1,09 et du sulfate ferreux séché à un rapport en poids sulfate de fer/eau de 1,38 à 1,71, obtenu par séchage du sulfate ferreux hydraté humide à des températures de 40 à 60°C, dans des proportions donnant un produit qui s'écoule bien et qui est stable à la conservation, sans adjonction au mélange d'agents neutralisants.

2. Procédé selon la revendication 1, caractérisé en ce que l'on utilise en tant que sulfate ferreux hydraté humide le sulfate ferreux hydraté obtenu en sous-produit à la production industrielle du bioxyde de titane.

3. Procédé selon la revendication 1, caractérisé en ce que le mélange du sulfate ferreux hydraté humide avec le sulfate ferreux séché est réalisé sous agitation intensive.

4. Procédé selon la revendication 1, caractérisé en ce que le sulfate ferreux hydraté humide à un rapport en poids sulfate de fer/eau de 1,09 à 0,92 est mélangé avec du sulfate ferreux séché à un rapport en poids sulfate de fer/eau de 1,38 à 1,71 dans des proportions mutuelles de 3 : 1 à 1 : 2.

5. Procédé selon la revendication 1, caractérisé en ce que le sulfate ferreux qui s'écoule bien et qui est stable à la conservation présente un rapport en poids sulfate de fer/eau de 1,17 à 1,50.
